# EUROPÄISCHE PATENTSCHRIFT

(11) **EP 0 367 318 B1**
(45) Veröffentlichungstag und Bekanntmachung des Hinweises auf die Patenterteilung: **03.05.1995**
(21) Anmeldenummer: 89202484.5
(22) Anmeldetag: 03.10.1989
(51) Int. Cl.: C09D 5/08, B05D 7/14

(54) **Platten- und bandförmige, mit einer Korrosionsschutzschicht überzogene Bleibleche**
Plate-shaped and ribbon-shaped lead sheets coated with an anticorrosive layer
Feuilles de plomb, sous forme de bandes et de plaques, revêtues d'une couche anticorrosion

(30) Priorität: 21.10.1988 DE 19883836012
(43) Veröffentlichungstag der Anmeldung: 09.05.1990
(73) Patentinhaber: Röhr + Stolberg GmbH, D-47747 Krefeld (DE)
(72) Erfinder: Röhr, Theodor, D-4150 Krefeld (DE)
(74) Vertreter: Rieger, Harald, Dr.

(56) Entgegenhaltungen:
- EP-0 137 535
- DE-2 239 409
- WPI, FILE SUPPLIER, AN=74 81748V, Derwent Publications Ltd, London, GB; & JP-A-74 039 332 (MATSUSHITA ELEC. IND. CO.) 24-10-1974

## Beschreibung

Die Erfindung betrifft platten- oder bandförmige, mit einer Korrosionsschutzschicht überzogene gewalzte Bleibleche, insbesondere für das Bauwesen.

Die hohe Korrosionsbeständigkeit gegenüber der Freibewitterung, das ästhetisch ansprechende Aussehen sowie die gute Verarbeitbarkeit aufgrund der großen Duktilität haben Bleibleche zu einem ausgezeichneten und vielseitig erprobten Werkstoff für das Bauwesen gemacht. Bleibleche lassen sich einerseits jeder Form der Unterkonstruktion manuell leicht anpassen, andererseits wird durch ihr hohes Flächengewicht auch bei großen Windkräften eine Rückformung sicher vermieden. Bleibleche werden daher seit langer Zeit für Dacheindekkungen, Abdichtungen und Isolierungen verwendet. Auch werden Bleibleche für die Gestaltung von Fassaden benutzt, da sie mit ihrem silber- bis schiefergrauen Aussehen eine optische Bereicherung des modernen Bauwesens darstellen.

Im chemischen Apparatebau dienen Bleibleche zur Auskleidung von Behältern, Tanks, Bottichen oder dergleichen.

Die Korrosionsbeständigkeit des Bleies beruht im wesentlichen auf der Bildung von durch Korrosion gebildeten, als Schutzschichten wirkenden Deckschichten aus Bleisalzen, die die Oberfläche gleichmäßig bedecken, gegenüber angreifenden Agentien schwer löslich sind und eine ausreichende Haftfestigkeit sowie Dichtigkeit aufweisen. Die Zusammensetzung der Deckschichten wird durch das die Korrosion verursachende Medium bestimmt.

Bei der Freibewitterung von Bleioberflächen entstehen durch die Reaktion mit dem Kohlendioxid der feuchten Luft Deckschichten aus basischem Bleicarbonat, durchsetzt von Bleioxid. Das für Bleioberflächen charakteristische silber- bis schiefergraue ästhetisch ansprechende Aussehen einheitlicher Farbtönung kann durch Bildung von weißen Bleicarbonatschichten in der Anfangsphase gestört werden. Es können undichte und schlecht haftende Deckschichten entstehen, die durch fallende und kondensierende Niederschläge von den Bleioberflächen abgeschwemmt werden. Die abgeschwemmten Korrosionsprodukte mindern das ästhetische Aussehen und verunreinigen die an die Bleioberflächen angrenzenden Materialien, wie z.B. das Mauerwerk, Dachpfannen oder dergleichen, und gelangen in das gesammelte Regenwasser. Um diesem Nachteil abzuhelfen, ist es bekannt, auf Bleioberflächen temporär wirkende Korrosionsschutzschichten von 10 bis 20 µm Dicke aus schnell trocknendem Patinieröl oder Kolophonium (DE-OS 33 31 317) aufzubringen. Diese werden bei der Freibewitterung allmählich störungsfrei abgebaut und ermöglichen dabei eine allmähliche gleichmäßige Deckschichtausbildung, die fest haftet, dicht ist und ein metallisch graues Aussehen einheitlicher Farbtönung besitzt. Der gleiche Zweck wird auch mit Bleiblechen verfolgt, die ein- oder beidseitig mit einer dünnen Schicht eines zinnhaltigen Werkstoffs plattiert sind (DE-PS 27 37 151).

Es hat sich jedoch gezeigt, daß diese Maßnahmen nicht ausreichen, wenn die mit einer temporär wirkenden Korrosionsschutzschicht beschichteten Bleioberflächen einem mit, insbesondere industriebedingten, schädlichen Emissionen belasteten Umweltklima ausgesetzt sind, in dem die mehr oder weniger gleichmäßig ausgebildeten Deckschichten aus Bleicarbonat bzw. die Zinnschichten durch Korrosionserscheinungen nach einiger Zeit ungleichmäßig abgetragen und durch die Niederschläge abgeschwemmt werden, wodurch die angrenzenden Bauflächen, wie z.B. das Mauerwerk, verschmutzt und beschädigt werden.

In der DE-A-22 39 409 ist vorgesehen, u.a. auch Bleiplatten mit einem Vinyl- und Divinylpolmer in wäßriger Lösung, die ein hydrophiles organisches Lösungsmittel für das Monomer enthält, zu beschichten. Dieser Lösung wird eine Metallionen abgebende Säure und ein Peroxid als Polymerisationskatalysator beigefügt und in diese Lösung die Bleiplatte eingetaucht, so daß sich ein polymerisierter Film durch Redox-Polymerisationen auf der Oberfläche bildet. Abgesehen davon, daß dieses Beschichtungsverfahren mit einem nicht unbeachtlichen Aufwand verbunden ist, ist eine ausreichende Haftfestigkeit der erzeugten Kunststoffschicht auf den Bleiplatten nicht in allen Fällen gewährleistet.

Aufgabe der vorliegenden Erfindung ist es, Bleibleche, vorzugsweise beidseitig, mit einer fest haftenden unlöslichen Korrosionsschutzschicht zu versehen, die eine Reaktion der Bleioberfläche mit dem Umweltklima und damit einen Flächenabtrag sowie eine Anreicherung der bleihaltigen Korrosionsprodukte in den Niederlägen verhindert. Gleichzeitig soll die Korrosionsschicht den optischen Gestaltungswünschen im Bauwesen, insbesondere von Dach- und Wandabdeckungen, ohne weiteres anpaßbar sein.

Gelöst ist diese Aufgabe durch eine auf gewalzte Bleichbleche aufgetragene Korrosionschutzschicht aus einem haftfesten, hochelastischen, witterungsbeständigen Lack.

Vorzugsweise besteht die Lackschicht aus Dispersions-Wasserlack auf der Basis von Acrylcopolymer, Epoxidharz, Alkydharz, Polyvinylalkohol in Form einer Dispersion oder Polyvinylchlorid in Form einer Dispersion.

Eine weitere Möglichkeit ist darin zu sehen, daß die Korrosionsschutzschicht aus einer Kunstharz-Lösungsmittellackschicht auf Basis von Epoxidharz, Alkydharz oder Acrylharz besteht.

Im Rahmen der weiteren Ausgestaltung der Erfindung beträgt die Dicke der Korrosionsschutzschicht 10 bis 30 µm, insbesondere 15 bis 25 µm.

In aller Regel sind die Korrosionsschutzschichten farblos, um die silber- bis schiefergraue Farbtönung der Bleiblechoberfläche zur Geltung zu bringen. Für besondere Gestaltungszwecke besteht die Möglichkeit, die Korrosionsschutzschichten zu pigmentieren.

Diese Korrosionsschutzschichten verhindern bei der Freibewitterung im stark oder gering mit schädlichen Emissionen belasteten Umweltklima das Entstehen von durch Korrosion gebildeten Schichten aus festen Reaktionsprodukten, insbesondere von mit Bleioxid durchsetztem basischen Bleicarbonat. Demzufolge kann kein Flächenabtrag sowie keine Anreicherung des abfließenden Regenwassers mit bleihaltigen Korrosionsprodukten entstehen. Ein besonderer Vorteil besteht darin, daß durch den Zusatz von RAL-Pigmenten die Korrosionsschutzschicht der gewünschten farblichen Gestaltung von Flächen, beispielsweise im Hochbau, ohne weiteres angepaßt werden kann. Da ferner die Korrosionsschutzschicht eine Kontaktkorrosion der Bleioberflächen mit feuchtem Bauholz oder durch warmfeuchte Luft, die organische Säure aus Holzkonstruktionen aufnimmt und sich an der Unterseite der Bleibleche als Kondenswasser niederschlägt, verhindert, kann weitgehend auf das Anbringen einer zweckentsprechenden, die Kontaktkorrosion unterbindende Unterlage verzichtet werden und die Bleioberfläche unmittelbar auf der Unterkonstruktion anliegen. Ebenso wird die Kontaktkorrosion der Bleioberfläche durch Beton oder Mörtel, die nur langsam abbinden und austrocknen, verhindert.

Die erfindungsgemäß gestalteten Bleibleche können in jede beabsichtigte Form gebracht werden und ebensogut als Bekleidung für gekrümmte Oberflächen und Profile wie für ebene Flächen benutzt werden, ohne daß durch die Verformung die Korrosionsschutzschicht beschädigt oder zerstört wird.

Um das Reaktionsverhalten der erfindungsgemäß mit einer Korrosionsschutzschicht versehenen Bleibleche möglichst praxisnah zu prüfen, wurden nachfolgende Untersuchungen an jeweils zehn wellenförmig profilierten Blechproben aus Blei, die mit einer 20 µm dicken
Korrosionsschutzschicht aus Dispersions-Acrylatlack beschichtet waren, durchgeführt.
a) Gemäß DIN 50906 wurden die Bleiblechproben an einem Freibewitterungsstand unter einem Neigungswinkel von 45° nach Süden aufgehängt und 10 Monate einem mit industriebedingten schädlichen Emissionen stark belasteten Umweltklima ausgesetzt.
b) Zur Klärung des Verhaltens und zum Erkennen von Fehlern der Korrosionsschutzschicht in feuchtem Umgebungsklima wurden die Bleiblechproben nach DIN 50017 drei Wochen lang in feucht-warmer Atmosphäre in einem dampfdichten Klimaschrank mit am Boden befindlichem Reinwasser von 30 bis 35° C Temperatur geprüft.
c) Für die Beurteilung des Verhaltens der Korrosionsschutzschicht in naß-heißer Atmosphäre wurden die Bleiblechproben zwei Stunden lang in einem dampfdichten Behälter mit am Boden befindlichen auf Siedetemperatur erhitzten Reinwasser Naß- bzw. Heißdampf ausgesetzt.
d) Für die Beurteilung des Verhaltens der Korrosionsschutzschicht bei extremen Klimawechseln wurden die Bleiblechproben unter einem Neigungswinkel von 45° auf einem Prüfstand befestigt und für die Dauer von 30 Minuten mittels Infrarotstrahlung auf 80° C erwärmt und anschließend durch Regenwasser abgekühlt, wobei die Wechselbeanspruchung mit einem 3-Monate-Zyklus erfolgte.
e) In gleicher Weise wurde auch die Beanspruchung durch Ultraviolettstrahlung untersucht, wobei im Unterschied zu der vorstehend beschriebenen Untersuchungsmethode die Bleiblechproben unabhängig von der Ultraviolettstrahlung auf Temperaturen von 10 bis 70° C erwärmt wurden.
f) Die Einwirkung von Tiefentemperaturen im Wechsel mit höheren Temperaturen auf die Korrosionsschutzschicht der Bleiblechproben wurde durch im Wechsel durchgeführte Abkühlung auf -30° C und anschließende Erwärmung auf 70° C von jeweils einstündiger Dauer mit einem 10-Stunden-Zyklus geprüft.

Die Auswertung der Ergebnisse der beschriebenen Untersuchungsmethoden ergab, daß die ursprüngliche Haftfestigkeit, Dichte und das optische Aussehen der Korrosionsschutzschichten durch die Belastungen in keiner Weise beeinträchtigt werden und die Korrosionsschutzschichten frei von Poren, Rissen und Blasen bleiben. Eine Massenänderung der Bleiblechproben infolge der Bildung von Korrosionsprodukten war nicht festzustellen.

Erfindungsgemäß wird die Korrosionsschutzschicht in der Weise hergestellt, daß der flüssige Lack auf das walzblanke Bleiblech durch Walzen, Tauchen, luftloses Spritzen, Spritzen mit Preßluft oder elektrostatisches Spritzen aufgetragen und bei einer Temperatur von 150 bis 210° C für die Dauer von 30 bis 60 s getrocknet wird.

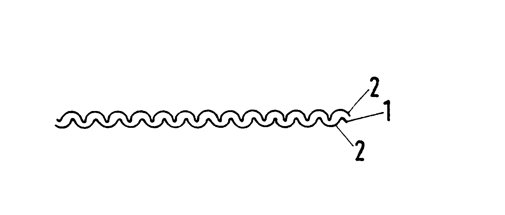

In der Zeichnung ist im Querschnitt ein wellenförmig profiliertes Bleiblech (1) dargestellt, das beidseitig mit einer Korrosionsschutzschicht (2) aus Dispersions-Acrylatwasserlack beschichtet ist.

## Patentansprüche

1. Platten- und bandförmige, mit einer Korrosionsschutzschicht überzogene gewalzte Bleibleche, **dadurch gekennzeichnet, daß** die Korrosionsschutzschicht (2) aus einer Dispersions-Wasserlackschicht auf Basis von Acrylcopolymer, Epoxidharz, Alkydharz, Polyvinylalkohol oder Polyvinylchlorid besteht.

2. Platten- und bandförmige, mit einer Korrosionsschutzschicht überzogene gewalzte Bleibleche, **dadurch gekennzeichnet, daß** die Korrosionsschutzschicht (2) aus einer Kunstharz-Lösungsmittellackschicht auf Basis von Epoxidharz, Alkydharz oder Acrylharz besteht.

3. Bleibleche nach den Ansprüchen 1 bis 3, **dadurch gekennzeichnet, daß** die Korrosionsschutzschicht (2) eine Dicke von 10 bis 30 µm, vorzugsweise 15 bis 25 µm besitzt.

4. Bleibleche nach den Ansprüchen 1 bis 4, **dadurch gekennzeichnet, daß** die Korrosionsschutzschicht (2) pigmentiert ist.

5. Verfahren zur Herstellung einer Korrosionsschutzschicht auf platten- und bandförmigen gewalztem Bleiblech nach einem der Ansprüche 1 und 2, **dadurch gekennzeichnet, daß** der Lack auf das walzblanke Bleiblech durch Walzen, Tauchen, luftloses Spritzen, Spritzen mit Preßluft oder elektrostatische Spritzen aufgetragen und bei einer Temperatur von 150 bis 210° C für die Dauer von 30 bis 60 s getrocknet wird.

## Claims

1. Plate- and strip-like rolled lead plates coated with an anti-corrosion layer, **characterised in that** the anti-corrosion layer (2) consists of a water-based emulsion paint or varnish layer on the basis of acrylic copolymer, epoxy resin, alkyd resin, polyvinyl alcohol or polyvinyl chloride.

2. Plate- and strip-like rolled lead plates coated with an anti-corrosion layer, **characterised in that** the anti-corrosion layer (2) consists of a synthetic-resin solvent paint or varnish layer on the basis of epoxy resin, alkyd resin or acrylic resin.

3. Lead plates according to Claims 1 to 3, **characterised in that** the anti-corrosion layer (2) has a thickness of 10 to 30 µm, preferably 15 to 25 µm.

4. Lead plates according to Claims 1 to 4, **characterised in that** the anti-corrosion layer (2) is pigmented.

5. A method for producing an anti-corrosion layer on plate- and strip-like rolled lead plate according to one of Claims 1 and 2, **characterised in that** the paint is applied to the bright-rolled lead plate by rolling, dipping, airless spraying, spraying with compressed air or electrostatic spraying and is dried at a temperature of 150 to 210° C for 30 to 60 seconds.

## Revendications

1. Feuilles de plomb laminées en forme de plaques et de bandes et revêtues d'une couche anticorrosion, **caractérisées en ce que** la couche (2) anticorrosion est en une couche de vernis en dispersion aqueuse à base d'un copolymère acrylique, de résine époxyde, de résine alkyde, d'alcool polyvinylique ou de poly-(chlorure de vinyle).

2. Feuilles de plomb laminées en forme de plaques et de bandes et revêtues d'une couche anticorrosion, **caractérisées en ce que** la couche (2) anticorrosion est en une couche de vernis en résine synthétique dans un solvant à base de résine époxyde, de résine alkyde ou de résine acrylique.

3. Feuilles de plomb selon l'une des revendications 1 à 3, **caractérisées en ce que** la couche (2) anticorrosion a une épaisseur de 10 à 30 µm, de préférence de 15 à 25 µm.

4. Feuilles de plomb suivant l'une des revendications 1 à 4, **caractérisées en ce que** la couche (2) anticorrosion est pigmentée.

5. Procédé de préparation d'une couche anticorrosion sur une feuille de plomb laminée en forme de plaques et de bandes suivant l'une des revendications 1 à 2, **caractérisé en ce qu'**il consiste à déposer le vernis sur la feuille de plomb brute de laminage par laminage, immersion, pulvérisation sans air, pulvérisation par de l'air comprimé ou pulvérisation électrostatique et à le sécher à une température de 150 à 210° C pendant une durée de 30 à 60 secondes.
